Europäisches Patentamt

(19) European Patent Office

Office européen des brevets

(11) Numéro de publication : **0 108 656**
**B1**

(12) **FASCICULE DE BREVET EUROPÉEN**

(45) Date de publication du fascicule du brevet :
16.06.87

(51) Int. Cl.⁴ : **G 01 C 22/02**

(21) Numéro de dépôt : **83401793.1**

(22) Date de dépôt : **13.09.83**

(54) **Compteur kilométrique électronique notamment pour cycle.**

(30) Priorité : **15.09.82 FR 8215593**

(43) Date de publication de la demande :
**16.05.84 Bulletin 84/20**

(45) Mention de la délivrance du brevet :
**16.06.87 Bulletin 87/25**

(84) Etats contractants désignés :
**BE DE GB IT LU NL**

(56) Documents cités :
**FR-A- 2 308 910**
**US-A- 4 156 190**
**US-A- 4 220 996**

(73) Titulaire : **SACHS-HURET S.A.**
**60, Avenue Félix Faure**
**F-92000 Nanterre (FR)**

(72) Inventeur : **Cuvelier, Antoine**
**2, passage Duguesclin**
**F-75015 Paris (FR)**
Inventeur : **Boucher, Guy**
**1, Rue du Cardinal Mercier**
**F-75018 Paris (FR)**

(74) Mandataire : **Moncheny, Michel et al**
**c/o Cabinet Lavoix 2 Place d'Estienne d'Orves**
**F-75441 Paris Cedex 09 (FR)**

Jouve. 18, rue St-Denis. 75001 Paris. France

Description

La présente invention concerne les compteurs kilométriques notamment pour cycles et se rapporte plus particulièrement à un compteur kilométrique électronique adapté pour donner à l'utilisateur un certain nombre d'indications de distance parcourue, de vitesse et autre sur simple actionnement de touches de commande.

On connaît des compteurs kilométriques électroniques qui comportent un microprocesseur recevant des informations par exemple d'un capteur magnétique associé à des aimants, solidaires de la roue avant du cycle, des moyens d'affichage numérique, des informations élaborées par le microprocesseur convenablement programmé à cet effet ainsi qu'un ou plusieurs boutons de commande placés sur la face avant du compteur.

Les compteurs kilométriques connus du type précité présentent un certain nombre d'inconvénients.

Leur manipulation nécessite de la part de l'utilisateur une attention soutenue notamment du fait que le ou les boutons de commande sont en raison de leur petite taille, d'une manipulation malaisée.

La recherche des boutons de commande et la reconnaissance de l'information présentée nécessite que l'utilisateur détourne son regard de la route pendant un laps de temps non négligeable, ce qui constitue un risque important d'accidents.

FR-A-2 308 910 décrit un dispositif compteur tachymètre intégré pour bicyclette comportant un boîtier contenant un microprocesseur connecté à un capteur de déplacements associé à une roue de la bicyclette, des moyens d'affichage de l'information et des touches de commande de l'affichage des informations contenues dans le microprocesseur.

Dans ce dispositif connu, les organes de déclenchement sont répartis en deux groupes portés par les cocottes de freins gauche et droite et comprennent des boutons poussoirs disposés sur le flanc externe de chaque cocotte et concernant respectivement les mesures de parcours, de vitesse et de temps.

Cependant, dans un tel dispositif, la présentation des informations n'est en général pas claire, de sorte que l'utilisateur a du mal à déterminer la nature de la grandeur affichée en réponse à une sollicitation de sa part.

L'invention vise a remédier aux inconvénients précités en créant un compteur kilométrique électronique qui permette un accès rapide et aisé à l'information qu'il contient tout en supprimant les incertitudes sur les grandeurs affichées.

Elle a donc pour objet un compteur kilométrique électronique notamment pour cycle, comportant un boîtier contenant un microprocesseur connecté à un capteur de déplacements associé à une roue du cycle, des moyens d'affichage de l'information et au moins une touche de commande de l'affichage des informations contenues dans le microprocesseur, caractérisé en ce que ladite touche de commande est constituée par au moins une partie de la face supérieure du boîtier, en ce qu'il comporte en outre un générateur pour l'émission de signaux sonores correspondant respectivement à la nature des grandeurs apparaissant sur les moyens d'affichage, en ce que la touche est associée à un interrupteur de fonctions principales, connecté au microprocesseur et dont l'actionnement déclenche d'une part l'affichage des grandeurs élaborées par lesdites fonctions principales et d'autre part, l'émission par le générateur de signaux caractérisant les grandeurs affichées.

L'invention sera mieux comprise à l'aide de la description qui va suivre, donnée uniquement à titre d'exemple et faite en se référant aux dessins annexes, sur lesquels :

la Figure 1 est une vue en élévation et en coupe d'un compteur kilométrique suivant l'invention ;

la Figure 2 est une coupe suivant la ligne 2-2 de la Fig. 1 ;

la Figure 3 est un schéma synoptique du circuit électronique contenu dans le boîtier du compteur de la Fig. 1 ;

la Figure 4 est une vue en plan de la face supérieure du compteur suivant l'invention sur laquelle est affichée une information de distance parcourue ;

la Figure 5 est une vue analogue à celle de la Fig. 4 et sur laquelle est affichée une information de vitesse.

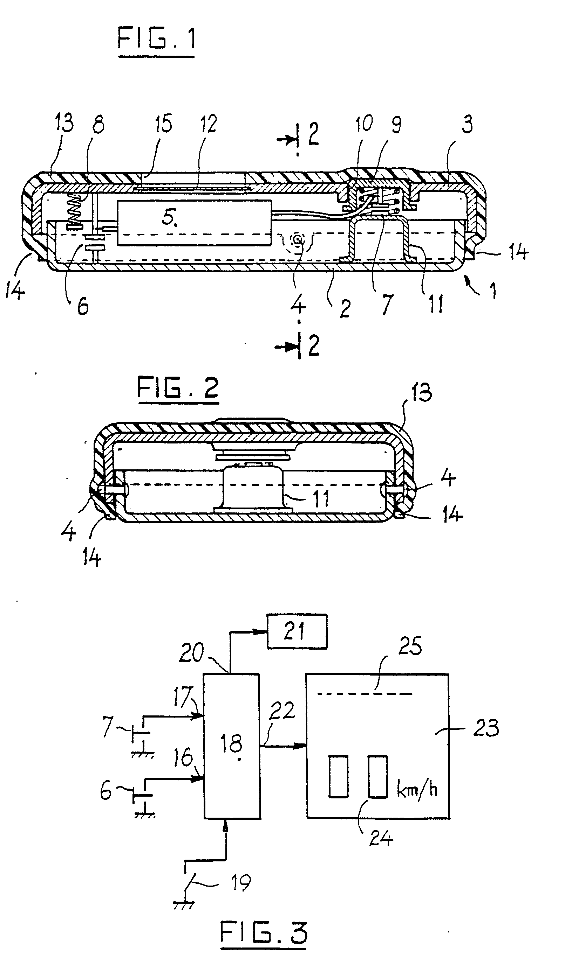

Le compteur kilométrique représenté aux Fig. 1 et 2, comporte un boîtier 1 formé d'un fond 2 et d'un couvercle 3 qui coiffe le fond 2 et qui est articulé sur celui-ci au moyen d'axes 4. Le boîtier ainsi constitué contient un circuit électronique de comptage et de traitement de l'information représenté plus en détail à la Fig. 3 et désigné dans son ensemble par la référence numérique 5.

Dans le boîtier 1 sont en outre montés un premier·interrupteur 5 destiné à commander les fonctions principales du compteur et un second interrupteur 7 destiné à commander des fonctions secondaires qui seront précisées par la suite.

Entre le fond 2 et le couvercle 3 sont interposés des ressorts 5 de rappel du couvercle en position haute, l'interrupteur 6 est commandé directement en exerçant une pression sur le couvercle 3. En revanche l'interrupteur 7 de commande des fonctions secondaires du compteur est commandé par un bouton poussoir 9 indépendant qui traverse un orifice 10 ménagé dans le couvercle. L'interrupteur 7 est avantageusement disposé sur un socle 11 placé dans le fond du boîtier. Le couvercle 3 est en outre pourvu d'une fenêtre transparente 12 destinée à permettre la lecture des informations apparaissant sur les moyens d'affichage qui font partie du circuit représenté à la Fig. 3.

L'ensemble du couvercle 3 est revêtu d'une gaine 13 en matière souple dont le bord 14 constitue un joint d'étanchéité au niveau de la jonction entre le fond 2 et le couvercle 3 du boîtier. Ainsi qu'on peut le voir notamment à la Fig. 2, le bord 14 de la gaine 13 assure également l'étanchéité de l'ensemble au niveau des axes d'articulation 4 du couvercle sur le fond. Si la gaine est réalisée en une matière opaque, elle comporte une découpe 15 laissant à découvert la fenêtre 12 d'affichage des informations fournies par le compteur.

Lorsque ce compteur est utilisé sur une bicyclette, il peut être monté sur un support approprié non représenté, fixé au guidon, à proximité de la potence de celui-ci.

Sur le circuit représenté à la Fig. 3, on retrouve les premier et second interrupteurs 6 et 7 commandés respectivement par le couvercle 3 du compteur et par le bouton 9 traversant ce couvercle. Ces interrupteurs sont respectivement reliés entre la masse et des bornes de commande 16 et 17 d'un microprocesseur 18. Le microprocesseur 18 est connecté à un capteur de déplacements 19 constitué par exemple par un capteur magnétique associé à une roue d'une bicyclette. Le microprocesseur comporte une première sortie 20 connectée à un générateur 21 de signaux sonores, et une seconde sortie 22 connectée à un dispositif d'affichage 23 qui dans le présent mode de réalisation comporte des moyens 24 d'affichage numérique et des moyens 25 d'affichage analogique.

Les moyens d'affichage numérique sont constitués par des chiffres formés de sept segments. Cet afficheur est du type utilisant les cristaux liquides nématiques, tandis que les moyens d'affichage analogiques sont constitués par des segments se lisant par réflexion de la lumière disposés en ligne et constituant une barre sombre dont la longueur varie avec la valeur de la grandeur mesurée.

On peut, selon une variante, envisager d'associer aux moyens d'affichages numériques tels que ceux représentés à la Fig. 3, des moyens d'affichage analogiques constitués par une aiguille ou encore par des traits divergents radiaux formés de segments dont l'allumage successif simule le déplacement d'une aiguille sur un cadran.

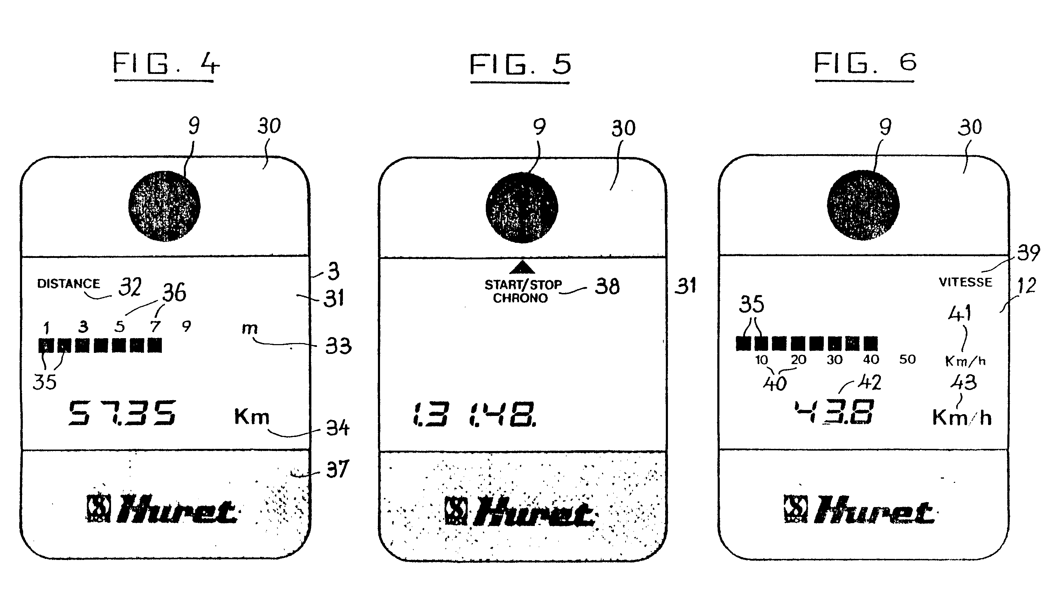

Sur les Fig. 4, 5 et 6, on a représenté la face avant du compteur suivant l'invention. Cette face avant est le dessus du couvercle 3, de forme générale rectangulaire, les grands côtés ou rectangle étant verticaux. Le dessus du couvercle 3 est divisé en trois plages juxtaposées. Une première plage 30 contient le bouton de commande 9 des fonctions secondaires. Une seconde plage 31 est occupée par la fenêtre d'affichage du compteur. Le dispositif d'affichage 23 (Fig. 3) est réalisé de telle manière que lorsque le microprocesseur 18 est commandé pour provoquer l'affichage d'une grandeur déterminée, des indications spécifiques à la nature de cette grandeur et des graduations en unités de mesure de celle-ci soient seules visibles. Ainsi, on voit sur la Fig. 4 que lors de l'affichage d'une distance, c'est l'indication de distance 32 ainsi que les graduations en mètres 33 et les unités en kilomètres 34 qui apparaissent seules sur les trois lignes d'affichage du compteur. Dans l'exemple considéré, l'indication « distance » 32 apparaît à gauche sur la première ligne de la fenêtre d'affichage, l'indication « m » apparaît à droite de la seconde ligne en regard du trait évolutif forme de carrés lumineux 35 qui définissent une mesure analogique de la distance en mètres sous la forme d'un trait lumineux de longueur variable.

Au-dessus des carrés lumineux 35, apparaissent des graduations 36 qui donnent une échelle en mètres. Sur la troisième ligne de la fenêtre d'affichage apparaissent des informations numériques de la distance parcourue et les unités 34 de mesure de cette distance. La mesure analogique en mètres complète la mesure numérique.

Enfin, le dessus du couvercle comporte une troisième plage 37 qui porte notamment la marque du constructeur.

Sur la Fig. 5, on a représenté le dessus du couvercle 3 dans la fenêtre d'affichage duquel apparaissent les informations relatives au chronométrage du temps écoulé à partir par exemple du début d'une randonnée à bicyclette. On voit sur cette figure, que toutes les informations de distance ont disparu et que seules des informations relatives au temps sont affichées.

Sur la première ligne apparaît une indication 38 à déclencher ou arrêter le chronométrage à l'aide du bouton 9.

Sur la seconde ligne occupée par les carrés formant la ligne lumineuse aucune information n'apparaît dans ce mode.

Sur la troisième ligne apparaît une indication numérique de temps écoulé depuis la précédente remise à zéro du système.

La Fig. 6 est une vue correspondante à celle des Fig. 4 et 5, sur laquelle on voit que seules des informations relatives à la vitesse instantanée du véhicule sur lequel est monté le compteur apparaissent dans la fenêtre d'affichage 12 à l'exclusion de toute autre indication.

Sur la première ligne apparaît le mot « vitesse » 39 placé à droite.

Sur la deuxième ligne apparaît une graduation 40 en dizaines de km/h et au-dessus de ces graduations, il y a éclairement des carrés lumineux 35 formant la ligne lumineuse d'indication analogique de la vitesse. A droite de la seconde ligne, apparaissent les unités 41 de mesure de la vitesse.

Enfin, sur la troisième ligne apparaît l'indication numérique 42 avec les unités 43 de mesure de la vitesse.

Lorsqu'au cours d'un trajet, l'utilisateur souhaite être renseigné sur la distance qu'il a parcouru à partir du moment où il a déclenché son compteur, il appuie une seule fois sur le couvercle 3, provoquant ainsi la fermeture de l'interrupteur 6 et le déclenchement d'une première fonction principale du compteur, à savoir la mesure de la distance. La programmation du microprocesseur 18 est réalisée de telle manière que lorsque celui-ci reçoit un premier signal en provenance de l'interrupteur 6, il déclenche immédiatement l'émission par le générateur de signaux sonores 21 d'un signal « bip » qui est un signal caractéristique de l'affichage de la distance, de sorte que l'utilisateur connaît à l'avance la nature de la grandeur qu'il va lire. Lorsqu'il regarde la fenêtre d'affichage du compteur, seules des indications de distance représentées à la Fig. 4 sont visibles, de sorte qu'il n'y a aucune ambiguïté dans la lecture de ces indications.

Lorsque l'utilisateur souhaite savoir le temps qui s'est écoulé depuis son départ, il actionne une nouvelle fois, le compteur en appuyant sur le couvercle 3 de celui-ci. Cette nouvelle action provoque l'émission par le dispositif générateur de signaux sonores d'un nouveau signal « bip-bip » associé à la notion de temps. L'utilisateur sait donc que les indications qui vont apparaître dans la fenêtre d'affichage à la suite de ce signal sonore seront des indications de temps. Ensuite, pour obtenir des indications de vitesse instantanée, l'utilisateur appuiera une troisième fois sur le couvercle 3 du boîtier du compteur, ce qui provoquera l'émission d'un signal « bip-bip-bip » associé à cette notion de vitesse. Les indications de vitesse apparaissant dans la fenêtre d'affichage de la manière représentée à la Figure 6 pourront être lues sans aucune ambiguïté par l'utilisateur, car celui-ci s'attendra à les trouver.

On voit donc qu'aux trois fonctions principales du compteur qui viennent d'être décrites, sont associés des signaux spécifiques qui les caractérisent et qui sont très faciles à retenir par l'utilisateur, de sorte que pour la recherche de l'information qu'il désire, il n'aura qu'à appuyer sur le couvercle du compteur et à écouter successivement les signaux émis jusqu'à obtention du signal correspondant à l'information qu'il souhaite obtenir.

L'agencement est tel que lorsque les trois indications de distance de temps et de vitesse ont été examinées, le système est prêt à répondre à un nouveau cycle d'interrogations.

Le bouton 9 de commande sous fonction peut être utilisé plus rarement car il commande par exemple l'affichage d'une distance totale parcourue, le déclenchement ou l'arrêt d'une opération de chronométrage avec l'affichage correspondant, l'affichage d'une vitesse moyenne, celui de l'heure, des dispositifs de distance, de vitesse et de temps ou autres. Cependant, le bouton 9 de commande de ces diverses fonctions secondaires, est disposé de manière à être visible et par conséquent aisément accessible. Quant aux diverses fonctions du compteur, elles sont assurées par une programmation appropriée du microprocesseur 18.

Dans le mode de réalisation qui vient d'être décrit, on a prévu l'utilisation de trois fonctions principales associées à trois signaux sonores qui les caractérisent et à trois affichages caractéristiques de ces fonctions. Les fonctions auxiliaires, elles, ne sont pas associées à des signaux sonores caractéristiques. En effet, pour qu'un tel moyen soit pratique, il est préférable que le nombre de signaux sonores à retenir par l'utilisateur soit relativement faible. On comprendra toutefois qu'il est possible de concevoir un compteur qui comprendrait un nombre plus important d'associations de fonctions et de signaux sonores qui les caractérisent.

L'interrupteur de fonction principale 6 est commandé par l'actionnement du couvercle 3 du boîtier du compteur monté oscillant sur le fond 2 de ce boîtier. On comprendra toutefois que d'autres moyens peuvent être utilisés pour actionner l'interrupteur 6. On peut envisager par exemple l'utilisation de touches à capteurs capacitifs disposées dans la face supérieure du boîtier et qui peuvent être déclenchées par simple approche de la main ou par contact, auquel cas, le boîtier du compteur ne comporterait plus aucune pièce mobile.

On peut également envisager des touches à détection infrarouge dont le déclenchement est assuré par simple proximité de la main de l'utilisateur.

Le générateur de signaux sonores peut également être constitué par un synthétiseur de la parole connecté au microprocesseur et qui au lieu de sons brefs et uniques caractérisant les grandeurs affichées, synthétise la voie humaine. Un haut-parleur est alors prévu pour diffuser le son du synthétiseur.

Le synthétiseur peut rendre les mots « distance », « temps », vitesse ou bien « kilomètre », « heure », kilomètreheure.

Le compteur électronique qui vient d'être décrit présente vis-à-vis des compteurs connus, l'avantage essentiel d'être d'une manipulation extrêmement simple et d'afficher des informations sans aucune ambiguïté.

En outre, il peut être actionné par l'utilisateur sans que celui-ci ait besoin de le regarder au moment où il l'actionne, les informations affichées étant annoncées par un signal sonore qui les caractérisent.

Le compteur kilométrique qui vient d'être décrit est considéré comme étant appliqué à une bicyclette, mais il est bien entendu utilisable pour donner des indications de distance parcourue, de temps, de vitesse et autres, pour tous types de véhicules.

**Revendications**

1. Compteur kilométrique électronique notamment pour cycle, comportant un boîtier (1) contenant un microprocesseur (18) connecté à un capteur de déplacements (19) associé à une roue du cycle, des moyens (23) d'affichage de l'information et au moins une touche de commande de l'affichage des informations contenues dans le microprocesseur, caractérisé en ce que ladite touche de commande est constituée par au moins une partie de la face supérieure du boîtier (1), en ce qu'il comporte en outre un générateur (21) pour l'émission de signaux sonores correspondant respectivement à la nature des grandeurs apparaissant sur les moyens d'affichage (23), en ce que la touche est associée à un interrupteur (6) de fonctions principales, connecté au microprocesseur et dont l'actionnement déclenche d'une part l'affichage des grandeurs élaborées par lesdites fonctions principales et d'autre part, l'émission desdits signaux par ledit générateur (21).

2. Compteur suivant la revendication 1, caractérisé en ce que le boîtier (1) comportant un fond (2) et un couvercle (3), ladite touche est constituée par le couvercle du boîtier monté oscillant sur ledit fond.

3. Compteur suivant la revendication 1, caractérisé en ce que ladite touche est constituée par un capteur capacitif ou un détecteur à infrarouge disposé dans la face supérieure du boîtier.

4. Compteur suivant l'une des revendications 1 à 3, caractérisé en ce qu'il comporte en outre une touche (9) de commande de fonctions secondaires associée à un interrupteur (7) de fonctions secondaires connecté au microprocesseur (18).

5. Compteur suivant l'une quelconque des revendications 1 à 4, caractérisé en ce que la face supérieure du boîtier (1) comporte une fenêtre (12) permettant l'observation des informations affectées par les moyens d'affichage (23).

6. Compteur suivant l'une des revendications 2 à 5, caractérisé en ce que la fenêtre (12) est réalisée dans le couvercle oscillant (3).

7. Compteur suivant les revendications 2 et 4, prises ensemble, caractérisé en ce que ladite touche (9) de commande de fonctions secondaires traverse la paroi du couvercle oscillant (3) par un orifice (10) ménagé dans celui-ci.

8. Compteur suivant l'une quelconque des revendications 2, 4 et 5, caractérisé en ce qu'il comporte en outre une gaine (13) recouvrant le couvercle (3), le bord (14) de la gaine constituant un joint d'étanchéité au niveau de la jonction entre le fond (2) et le couvercle (3) du boîtier.

9. Compteur suivant l'une des revendications 1 à 8, caractérisé en ce que les signaux sonores émis par ledit générateur (21) sont des sons brefs dont le nombre caractérise respectivement les informations affichées lors de l'éxécution par le microprocesseur (18) des fonctions principales.

10. Compteur suivant l'une des revendications 1 à 9, caractérisé en ce que lesdites fonctions principales sont au nombre de trois, la première fonction principale étant la distance identifiée par un son bref, la seconde fonction principale étant le temps identifié par deux sons brefs et la troisième fonction principale étant la vitesse instantanée identifiée par trois sons brefs.

11. Compteur suivant l'une des revendications 1 à 9, caractérisé en ce que le générateur (21) de signaux sonores est un synthétiseur électronique de la parole connecté au microprocesseur et associé à un haut-parleur destiné à synthétiser des mots désignant la nature et/ou les unités des grandeurs affichées.

12. Compteur suivant l'une des revendications 1 à 11 caractérisé en ce que l'affichage d'une grandeur donnée appelée soit par la touche (3) de fonction principale, soit par la touche (9) de fonction secondaire, entraîne l'effacement du dispositif d'affichage de toute indication relative à une grandeur affichée précédemment.

13. Compteur suivant l'une des revendications 4 à 12, caractérisé en ce que lesdites fonctions secondaires sont notamment, le chronométrage, la vitesse moyenne, la distance totale parcourue, l'heure, les objectifs de distance, de vitesse et de temps.

**Claims**

1. An electronic odometer in particular for a cycle, comprising a case (11), a micro-processor (18) in the case, a sensor of movements (19) for associating with a wheel of the cycle and connected to the micro-processor, means (23) for displaying items of information, and at least one control key relating to the display of items of information contained in the micro-processor, characterized in that said control key is constituted by at least a portion of the upper side of the case (1), in that it further comprises a generator (21) for the transmission of sound signals corresponding respectively to the kind of the magnitudes appearing on the display means (23), in that said key is associated to a switch (6) of main functions connected to said micro-processor (18), the operation of said switch initiating on the one hand the displaying of the magnitudes generated by said main functions and on the other hand the transmission of said signals by said generator (21).

2. An odometer according to claim 1, characterized in that the case (1) comprises a bottom (2) and a cover (3) and said key is constituted by the cover of the case which is pivotally mounted on said bottom.

3. An odometer according to claim 1, characterized in that said key is constituted by a capacitive sensor or an infra-red ray detector disposed in the upper side of the case.

4. An odometer according to anyone of claims 1 to 3, characterized in that it further comprises a second control key (9) relating to secondary functions associated with a second switch (7) relating to secondary functions connected to the micro-processor (18).

5. An odometer according to anyone of claims 1 to 4, characterized in that the upper side of the case (1) comprises a window (12) allowing the observation of items of information relating to the display means (23).

6. An odometer according to claims 2 to 5, characterized in that the window (12) is formed in said pivotally mounted cover (3).

7. An odometer according to claims 2 and 4, characterized in that said control key (9) of the secondary functions extends through a wall of the pivotally mounted cover (3) by way of an orifice (10) in the same.

8. An odometer according to anyone of claims 2, 4 and 5, characterized in that it further comprises a sheath (13) covering the cover (3), the sheath having an edge portion (14) which constitutes a sealing element in the region of a junction between the bottom (2) and the cover (3) of the case.

9. An odometer according to anyone of claims 1 to 8, characterized in that the sound signals emitted by said generator (21) are brief sounds the number of which sounds respectively characterizes the items of information displayed when the micro-processor (18) carries out main functions.

10. An odometer according to anyone of claims 1 to 9 characterized in that said main functions are three in number, the first main function being the distance which is identified by a brief sound, the second main function being the time identified by two brief sounds and the third main function being the instantaneous speed identified by three brief sounds.

11. An odometer according to anyone of claims 1 to 9, characterized in that the sound signal generator (21) is an electronic synthetizer of the voice connected to the micro-processor and associated with a loudspeaker and adapted to synthetize words designating the nature and/or the units of the displayed magnitudes.

12. An odometer according to anyone of claims 1 to 11, characterized in that the display of a given magnitude brought about selectively by the main function key (3) and the secondary function key (9), erases any indication relating to a previously displayed magnitude from the display means.

13. An odometer according to anyone of claims 4 to 12, characterized in that said secondary functions are in particular, the timing by means of a chronometer, the average speed, the total distance travelled through the hour of the day, the objects of distance, speed and time.

## Patentansprüche

1. Elektronischer Kilometerzähler, insbesondere für Fahrräder, mit einem Gehäuse, das folgende Teile enthält : einen Mikroprozessor (18), der mit einem einem Rad des Fahrrads zugeordneten Bewegungsaufnehmer (29) verbunden ist, Anzeigemittel (23) zur Informationsdarstellung sowie wenigstens eine Steuertaste für die Steuerung der Anzeige der in dem Mikroprozessor enthaltenen Informationen, dadurch gekennzeichnet, daß die Steuertaste von wenigstens einem Teil der Oberseite des Gehäuses gebildet ist, daß ein Generator (21) zur Ausstrahlung von akustischen Signalen vorgesehen ist, die jeweils der Art der auf den Anzeigemitteln (23) erscheinenden Größen entsprechen, und daß die Steuertaste einem mit dem Mikroprozessor verbundenen Schalter (6) für Grundfunktionen zugeordnet ist, dessen Betätigung einerseits die Anzeige der durch diese Grundfunktionen verarbeiteten Größen und andererseits die Ausstrahlung der genannten Signale durch den Generator (21) auslöst.

2. Kilometerzähler nach Anspruch 1, dadurch gekennzeichnet, daß das Gehäuse (1) einen Boden (2) und ein Deckelteil (3) besitzt und daß die Steuertaste von dem beweglich an dem Boden (2) montierten Deckelteil (3) gebildet ist.

3. Kilometerzähler nach Anspruch 1, dadurch gekennzeichnet, daß die Steuertaste von einem in der Oberseite des Gehäuses angeordneten kapazitiven oder Infrarot-Sensor gebildet ist.

4. Kilometerzähler nach einem der Ansprüche 1 bis 3, dadurch gekennzeichnet, daß ferner eine Steuertaste (9) für Hilfsfunktionen vorgesehen ist, die einem mit dem Mikroprozessor (18) verbundenen Schalter (7) für Hilfsfunktionen zugeordnet ist.

5. Kilometerzähler nach einem der vorhergehenden Ansprüche, dadurch gekennzeichnet, daß die Oberseite des Gehäuses (1) ein Fenster (12) aufweist, daß die Beobachtung der von den Anzeigemitteln (23) wiedergegebenen Informationen ermöglicht.

6. Kilometerzähler nach einem der Ansprüche 2 bis 5, dadurch gekennzeichnet, daß das Fenster (12) in dem beweglichen Deckelteil (3) angebracht ist.

7. Kilometerzähler nach Anspruch 2 und 4, dadurch gekennzeichnet, daß die Steuertaste (9) für die Hilfsfunktionen die Wandung des beweglichen Deckelteils (3) durch eine in diesem angebrachte Öffnung (20) durchdringt.

8. Kilometerzähler nach einem der Anprüche 2, 4 und 5, dadurch gekennzeichnet, daß eine das Deckelteil (3) überziehende Hülle (13) vorgesehen ist, deren Rand (14) eine Dichtung in Höhe der Verbindungsgstelle zwischen Boden (2) und Deckelteil (3) des Gehäuses (1) bildet.

9. Kilometerzähler nach einem Ansprüche 1 bis 8, dadurch gekennzeichnet, daß· die von dem Generator (21) ausgestrahlten akustischen Signale kurze Töne sind, deren Zahl die jeweiligen Informationen charakterisiert, die angezeigt werden, wenn der Mikroprozessor (18) Grundfunktionen ausführt.

10. Kilometerzähler nach einem der Ansprüche 1 bis 9, dadurch gekennzeichnet, daß drei Grundfunktionen vorgesehen sind, wobei die erste Grundfunktion die durch einen kurzen Ton identifizierte Entfernung ist, die zweite Grundfunktion die durch zwei kurze Töne identifizierte Zeit und die dritte Grundfunktion die durch drei kurze Töne identifierte Momentangeschwindigkeit ist.

11. Kilometerzähler nach einem der Ansprüche 1 bis 9, dadurch gekennzeichnet, daß der Generator (21) für die akustischen Signale ein mit dem Mikroprozessor verbundener und einem Lautsprecher zugeordneter elektronischer Sprachsynthesizer ist, der Wörter synthetisiert, die die Art und/oder die Einheiten der angezeigten Größen bestimmen.

12. Kilometerzähler nach einem der Ansprüche 1 bis 11, dadurch gekennzeichnet, daß die durch die Steuertaste (3) für die Grundfunktionen oder durch die Steuertaste (9) für Hilfsfunktionen hervorgerufene Anzeige einer gegebenen Größe das Löschen aller zuvor angezeigten Größen auf der Anzeigevorrichtung bewirkt.

13. Kilometerzähler nach einem der Ansprüche 4 bis 12, dadurch gekennzeichnet, daß die genannten Hilfsfunktionen insbesondere die Chronometrierung, die mittlere Geschwindigkeit, die insgesamt zurückgelegte Entfernung, die Zeit und die Enfernungs-, Geschwindigeits- und Zeitziele sind.

## FIG.1

## FIG.2

## FIG.3

# FIG. 4

DISTANCE  32  36

1  3  5  7  9        m

35

57.35   Km

🛡 *Huret*

# FIG. 5

START/STOP
CHRONO   38

1.3 1.48.

🛡 *Huret*

# FIG. 6

VITESSE   12

35

10  20  30  40  50

40   42

43.8   Km/h

41  Km/h

43

🛡 *Huret*